# EUROPEAN PATENT APPLICATION

(11) **EP 2 916 606 A1**
(43) Date of publication of application: **09.09.2015**
(21) Application number: 13851703.2
(22) Date of filing: 31.10.2013
(51) Int. Cl.: H04W 72/04, H04W 52/02

(54) **MOBILE COMMUNICATION SYSTEM, WIRELESS TERMINAL, AND MOBILE COMMUNICATION METHOD**

(30) Priority: 02.11.2012 US 201261721674 P; 02.11.2012 US 201261721692 P
(71) Applicant: Kyocera Corporation, Kyoto-shi Kyoto 612-8501 (JP)
(72) Inventor: YAMAZAKI, Chiharu, Kyoto-shi Kyoto 612-8501 (JP); FUJISHIRO, Masato, Kyoto-shi Kyoto 612-8501 (JP); ADACHI, Hiroyuki, Kyoto-shi Kyoto 612-8501 (JP); MORITA, Kugo, Kyoto-shi Kyoto 612-8501 (JP); MATSUMOTO, Naohisa, Kyoto-shi Kyoto 612-8501 (JP); KASHIWASE, Susumu, Kyoto-shi Kyoto 612-8501 (JP)
(74) Representative: Schwabe - Sandmair - Marx
(86) International application number: PCT/JP2013/079541
(87) International publication number: WO 2014/069568

(57) **Abstract**

The mobile communication system performs communication by using a plurality of subframes between a radio terminal and a radio base station. The radio terminal comprises: a reception unit that receives offset information indicating an interval between a first subframe and a second subframe that is later than the first subframe on a time axis out of the plurality of subframes; and a control unit that applies assignment information included in the first subframe to the second subframe, not to the first subframe.

## Description

### TECHNICAL FIELD

The present invention relates to a mobile communication system in which communication is performed by using a plurality of subframes between a radio terminal and a radio base station assuming a unit configured by a control region and a data region as one subframe, a radio terminal used in the mobile communication system, and a mobile communication method therefor.

### BACKGROUND ART

Conventionally, there has been known a mobile communication system in which communication is performed by using a plurality of subframes between a radio terminal and a radio base station assuming a unit configured by a control region (for example, PDCCH) and data region (for example, PDSCH) as one subframe. For example, as such a mobile communication system, LTE (Long Term Evolution) has been known (see non patent document 1, for example).

### PRIOR ART DOCUMENT

### Non-PATENT DOCUMENT

Non-Patent Document 1: 3GPP technical report "TS 36.300 V11.3.0" September 2012.

### SUMMARY OF THE INVENTION

In such a mobile communication system, the radio terminal performs communication by applying assignment information included in a control region included in a predetermined subframe to a data region included in the predetermined subframe. That is, the subframe to which the control region including the assignment information belongs is the same as the subframe to which the data region belongs, the data region to which the assignment information is applied.

Accordingly, the radio terminal must always monitor the control region (for example, the PDCCH) included in the subframe, restricting reduction in power consumption by the radio terminal.

A mobile communication system according to one embodiment performs communication by using a plurality of subframes between a radio terminal and a radio base station. The radio terminal comprises: a reception unit that receives offset information indicating an interval between a first subframe and a second subframe that is later than the first subframe on a time axis out of the plurality of subframes; and a control unit that applies assignment information included in the first subframe to the second subframe, not to the first subframe.

### BRIEF DESCRIPTION OF THE DRAWINGS

[Fig. 1]Fig. 1 is a diagram illustrating a mobile communication system 100 according to a first embodiment.
[Fig. 2]Fig. 2 is a diagram illustrating a radio frame according to the first embodiment.
[Fig. 3] Fig. 3 is a diagram illustrating a radio resource according to the first embodiment.
[Fig. 4] Fig. 4 is a diagram illustrating a case where the first embodiment is applied.
[Fig. 5] Fig. 5 is a diagram illustrating a case where the first embodiment is applied.
[Fig. 6]Fig. 6 is a block diagram illustrating a radio terminal 10 according to the first embodiment.
[Fig. 7]Fig. 7 is a block diagram illustrating a radio base station 310 according to the first embodiment.
[Fig. 8] Fig. 8 is a sequence diagram illustrating a mobile communication method according to the first embodiment.
[Fig. 9]Fig. 9 is a diagram illustrating a case where a first modification is applied.
[Fig. 10]Fig. 10 is a diagram illustrating a case where a second modification is applied.
[Fig. 11] Fig. 11 is a diagram illustrating a case where a third modification is applied.
[Fig. 12]Fig. 12 is a diagram illustrating a case where a fourth modification is applied.

### DESCRIPTION OF THE EMBODIMENT

Hereinafter, a mobile communication system according to an embodiment of the present invention will be described with reference to the drawings. In addition, in the description of the drawings below, identical or similar symbols are assigned to identical or similar portions.

It will be appreciated that the drawings are schematically shown and the ratio and the like of each dimension are different from the real ones. Accordingly, specific dimensions should be determined in consideration of the explanation below. Of course, among the drawings, the dimensional relationship and the ratio may be different.

### [Overview of Embodiment]

The mobile communication system according to an embodiment performs communication by using a plurality of subframes between a radio terminal and a radio base station. The radio terminal comprises: a reception unit that receives offset information indicating an interval between a first subframe and a second subframe that is later than the first subframe on a time axis out of the plurality of subframes; and a control unit that applies assignment information included in the first subframe to the second subframe, not to the first subframe.

In the embodiment, the control unit applies assignment information included in a first subframe to a second subframe, not to the first subframe. Thus, the control unit is possible to omit monitoring of region (for example, PDSCH) included in subframes from the first subframe (except for assignment information) to a subframe prior to the second subframe. Thereby, power consumption in the radio terminal can be reduced.

It is noted that, in the present specification, "monitoring" means reception (and demodulation) of at least one or more signals of a control signal, a reference signal and a data signal. Therefore, the control unit can omit reception and demodulation of a data signal included in data region included in subframes from the first subframe to a subframe prior to the second subframe, for example.

In the embodiment, the offset information is included in an RRC message for controlling a user terminal or broadcast information broadcast from the radio base station.

In the embodiment, the offset information is included in a control signal carried via PDCCH that is a channel that carries a control signal or ePDCCH that is a channel that carries a control signal in a downlink shared channel.

In the embodiment, the control signal includes CIF that is a field that designates one component carrier in a plurality of component carriers. The CIF expresses information for designating the component carrier and the offset information.

In the embodiment, the reception unit receives subframe-number designating information that designates the number of consecutive subframes starting from the second subframe as an RRC message, and the control unit applies assignment information included in the first subframe over subframes of which the number is designated by the subframe-number designating information.

In the embodiment, the assignment information included in the first subframe includes subframe-number designating information that designates the number of consecutive subframes starting from the second subframe, and the control unit applies assignment information that is included in the control region included in the first subframe over subframes of which the number is designated by the subframe-number designating information.

In the embodiment, the assignment information included in the first subframe includes subframe specifying information that specifies a subframe to which the assignment information is to be applied out of a predetermined number of consecutive subframes starting from the second subframe, and the control unit applies the assignment information to the subframe specified by the subframe specifying information.

A radio terminal according to the embodiment is a radio terminal that is used in a mobile communication system that performs communication by using a plurality of subframes between a radio terminal and a radio base station. The radio terminal comprises: a reception unit that receives offset information indicating an interval between a first subframe and a second subframe that is later than the first subframe on a time axis out of the plurality of subframes; and a control unit that applies assignment information included in the first subframe to the second subframe, not to the first subframe.

A mobile communication method according to the embodiment is a mobile communication method that is used in a mobile communication system that performs communication by using a plurality of subframes between a radio terminal and a radio base station. The mobile communication method comprises: a step of receiving, in the radio terminal, offset information indicating an interval between a first subframe and a second subframe that is later than the first subframe on a time axis out of the plurality of subframes; and a step of applying, in the radio terminal, assignment information included in the first subframe to the second subframe, not to the first subframe.

A mobile communication system according to the embodiment is a mobile communication system that performs communication by using a plurality of subframes between a radio terminal and a radio base station. The radio terminal includes a control unit that applies assignment information included in a first subframe to a second subframe when a power reduction mode is designated in which the assignment information included in the first subframe is applied to the second subframe which is later than the first subframe on a time axis.

In the first modification of the embodiment, the first subframe belongs to a first component carrier, and the second subframe belongs to a second component carrier that is different from the first component carrier.

In the first modification of the embodiment, the control unit omits, on the basis of the assignment information, monitoring a subframe in which no data is assigned to the radio terminal, out of subframes from a subframe belonging to the second component carrier and corresponding to the first subframe to a subframe prior to the second subframe belonging to the second component carrier.

In the embodiment, the power reduction mode is designated when quality required for communication performed between the radio terminal and the radio base station is less strict than a predetermined threshold value.

In the embodiment, the power reduction mode is designated when a movement speed of the radio terminal is slower than a predetermined threshold value.

In the embodiment, the power reduction mode is designated when a battery remaining amount provided in the radio terminal is less than a predetermined threshold value.

In the embodiment, the power reduction mode is designated when the radio terminal is not connected to a system power supply.

In the embodiment, the power reduction mode is designated when the power reduction mode is designated by a user of the radio terminal.

In the embodiment, the power reduction mode is designated when a traffic volume transmitted from the radio base station to the radio terminal or a data amount existing in a transmission buffer of the radio base station is less than a predetermined threshold value.

In the embodiment, the power reduction mode is designated when the radio terminal receives a message indicating that the power reduction mode is started, from the radio base station.

In the embodiment, the radio base station determines to designate the power reduction mode and transmits, to the radio terminal, a message indicating that the power reduction mode is started.

In the embodiment, the radio terminal determines to designate the power reduction mode and transmits, to the radio base station, a message indicating that the power reduction mode is started.

In the embodiment, the subframe is configured by a control region and a data region, and the control unit omits monitoring of the control region included in subframes from a subframe next to the first subframe to the second subframe, and omits monitoring of the first subframe excluding the assignment information and the data region included in subframes from a subframe next to the first subframe to a subframe prior to the second subframe.

A radio terminal according to the embodiment is a radio terminal that is used in a mobile communication system that performs communication by using a plurality of subframes between a radio terminal and a radio base station. The radio terminal comprises: a control unit that applies assignment information included in a first subframe to a second subframe when a power reduction mode is designated in which assignment information included in the first subframe is applied to the second subframe which is later than the first subframe on a time axis.

A mobile communication method according to the embodiment is a mobile communication method that is used in a mobile communication system that performs communication by using a plurality of subframes between a radio terminal and a radio base station. The mobile communication method comprises: a step of applying, in the radio terminal, assignment information included in a first subframe to a second subframe when a power reduction mode is designated in which assignment information included in the first subframe is applied to the second subframe which is later than the first subframe on a time axis.

### [First Embodiment]

### (Mobile communication system)

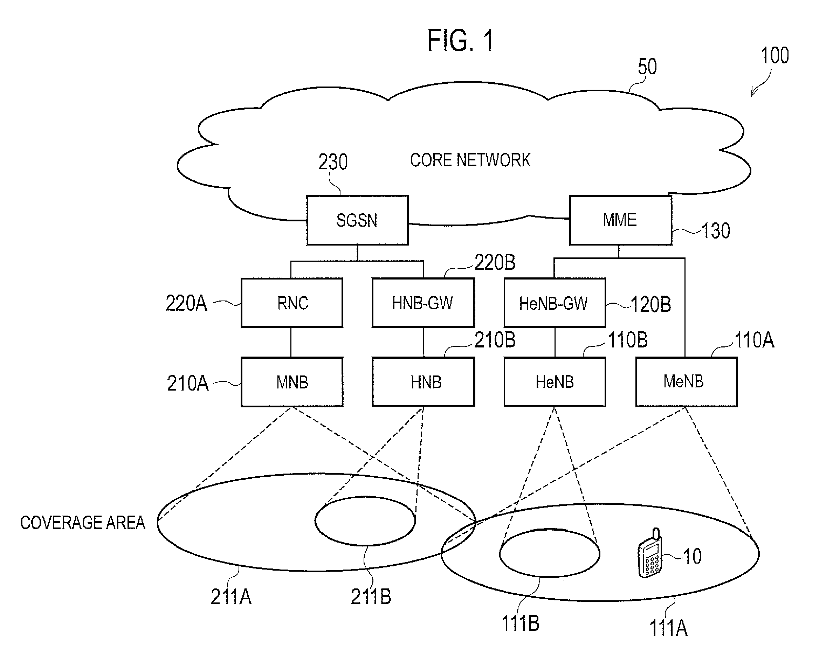

Hereinafter, a mobile communication system according to a first embodiment will be described. Fig. 1 is a diagram illustrating a mobile communication system 100 according to the first embodiment.

As illustrated in Fig. 1, the mobile communication system 100 includes a radio terminal 10 (hereinafter, referred to as UE 10) and a core network 50. Furthermore, the mobile communication system 100 includes a first communication system and a second communication system.

The first communication system is a communication system corresponding to LTE (Long Term Evolution), for example. The first communication system has a base station 110A (hereinafter, referred to as MeNB 110A), a home base station 110B (hereinafter, referred to as HeNB 110B), a home base station gateway 120B (hereinafter, referred to as HeNB-GW 120B), and MME 130, for example.

In addition, a radio access network (E-UTRAN; Evoled Universal Terrestrial Radio Access Network) corresponding to the first communication system is configured by the MeNB 110A, the HeNB 110B, and the HeNB-GW 120B.

The second communication system is a communication system corresponding to UMTS (Universal Mobile Telecommunication System), for example. The second communication system includes a base station 210A (hereinafter, referred to as MNB 210A), a home base station 210B (hereinafter, referred to as HNB 210B), RNC 220A, a home base station gateway 220B (hereinafter, referred to as HNB-GW 220B), and SGSN 230.

In addition, a radio access network (UTRAN; Universal Terrestrial Radio Access Network) corresponding to the second communication system is configured by the MNB 210A, the HNB 210B, the RNC 220A, and the HNB-GW 220B.

The UE 10 is a device (User Equipment) configured to communicate with the second communication system or the first communication system. For example, the UE 10 has a function of performing radio communication with the MeNB 110A and the HeNB 110B. Alternatively, the UE 10 has a function of performing radio communication with the MNB 210A and the HNB 210B.

The MeNB 110A, which manages a general cell 111A, is a device (evolved NodeB) configured to perform radio communication with the UE 10 being present in the general cell 111A.

The HeNB 110B, which manages a specific cell 111B, is a device (Home evolved NodeB) configured to perform radio communication with the UE 10 being present in the specific cell 111B.

The HeNB-GW 120B, which is connected to the HeNB 110B, is a device (Home evolved NodeB Gateway) configured to manage the HeNB 110B.

The MME 130, which is connected to the MeNB 110A, is a device (Mobility Management Entity) configured to manage the mobility of the UE 10 having set up a radio connection with the MeNB 110A. Furthermore, the MME 130, which is connected to the HeNB 110B through the HeNB-GW 120B, is a device configured to manage the mobility of the UE 10 having set up a radio connection with the HeNB 110B.

The MNB 210A, which manages a general cell 211A, is a device (NodeB) configured to perform radio communication with the UE 10 being present in the general cell 211A.

The HNB 210B, which manages a specific cell 211B, is a device (Home NodeB) configured to perform radio communication with the UE 10 being present in the specific cell 211B.

The RNC 220A, which is connected to the MNB 210A, is a device (Radio Network Controller) configured to set up a radio connection (RRC Connection) with the UE 10 being present in the general cell 211A.

The HNB-GW 220B, which is connected to the HNB 210B, is a device (Home NodeB Gateway) configured to set up a radio connection (RRC Connection) with the UE 10 being present in the specific cell 211B.

The SGSN 230 is a device (Serving GPRS Support Node) configured to perform packet switching in a packet switching domain. The SGSN 230 is provided in the core network 50. Although not illustrated in Fig. 1, a device (MSC; Mobile Switching Center) configured to perform circuit switching in a circuit switching domain may be provided in the core network 50.

In addition, it is noted that the general cell and the specific cell are understood as a function of performing radio communication with the UE 10. However, the general cell and the specific cell are also used as a term indicating a coverage area of a cell. Furthermore, cells such as general cells and specific cells are identified by frequencies, spreading codes, time slots and the like used in the cells.

Here, a coverage area of the general cell is wider than a coverage area of the specific cell. The general cell, for example, is a macro cell provided by a communication provider. The specific cell, for example, is a femto cell or a home cell provided by a third party other than the communication provider. The specific cell may be a CSG (Closed Subscriber Group) cell or a pico cell provided by the communication provider.

Hereinafter, the first communication system will be mainly described. The following description may also be applied to the second communication system.

In the first communication system, an OFDMA (Orthogonal Frequency Division Multiple Access) scheme is used as a downlink multiplexing scheme, and an SC-FDMA (Single-Carrier Frequency Division Multiple Access) scheme is used as an uplink multiplexing scheme.

Furthermore, in the first communication system, as an uplink channel, an uplink control channel (PUCCH; Physical Uplink Control Channel), an uplink shared channel (PUSCH; Physical Uplink Shared Channel) and the like exist. Furthermore, as a downlink channel, a downlink control channel (PDCCH; Physical Downlink Control Channel), a downlink shared channel (PDSCH; Physical Downlink Shared Channel) and the like exist.

The uplink control channel is a channel that carries a control signal. The control signal, for example, includes CQI (Channel Quality Indicator), PMI (Precoding Matrix Indicator), RI (Rank Indicator), SR (Scheduling Request), and ACK/NACK.

The CQI is a signal that notifies a recommended modulation scheme and an encoding rate to be used in downlink transmission. The PMI is a signal that indicates a precoder matrix preferably used for the downlink transmission. The RI is a signal that indicates the number of layers (the number of streams) to be used in the downlink transmission. The SR is a signal that requests the assignment of an uplink radio resource (a resource block which will be described later). The ACK/NACK is a signal that indicates whether or not a signal that is transmitted through a downlink channel (for example, PDSCH) has been able to be received.

The uplink shared channel is a channel that carries a control signal (including the aforementioned control signal) and/or a data signal. For example, the uplink radio resource may be assigned only to the data signal, or may be assigned such that the data signal and the control signal are multiplexed.

The downlink control channel is a channel that carries a control signal. The control signal (DCI;Downlink Control Information) is, for example, assignment information (Uplink SI (Scheduling Information), Downlink SI (Scheduling Information)), and TPC bit.

The Uplink SI is a signal that indicates the assignment of the uplink radio resource. The Downlink SI is a signal that indicates the assignment of a downlink radio resource. The TPC bit is a signal that indicates increase and decrease in power of a signal that is transmitted through the uplink channel.

Further, when the first communication system is operated in a case (CA; Carrier Aggregation) where communication is performed using a plurality of component carriers, the control signal (the DCI) may include CIF (Carrier Indicator Field) that designates one component carrier in a plurality of component carriers including the PDSCH to which assignment information should be applied. The plurality of component carriers include a component carrier (PCC; Primary Component Carrier) that carries the control signal and a component carrier (SCC; Secondary Component Carrier) other than the PCC.

The downlink shared channel is a channel that carries the control signal and/or the data signal. For example, the downlink radio resource may be assigned only to the data signal, or may be assigned such that the data signal and the control signal are multiplexed.

In addition, examples of the control signal transmitted through the downlink shared channel include TA (Timing Advance). The TA is information for correcting the timing of transmission between the UE 10 and the MeNB 110A, and is measured by the MeNB 110A on the basis of an uplink signal transmitted from the UE 10.

Furthermore, examples of the control signal that is transmitted through a channel other than the downlink control channel (PDCCH) and the downlink shared channel (PDSCH) include the ACK/NACK. The ACK/NACK is a signal that indicates whether a signal transmitted through the uplink channel (for example, PUSCH) has been able to be received.

In addition, the general cell and the specific cell broadcast broadcast information through a broadcast channel (BCCH; Broadcast Control Channel). The broadcast information, for example, is information such as MIB (Master Information Block) or SIB (System Information Block).

### (Radio frame)

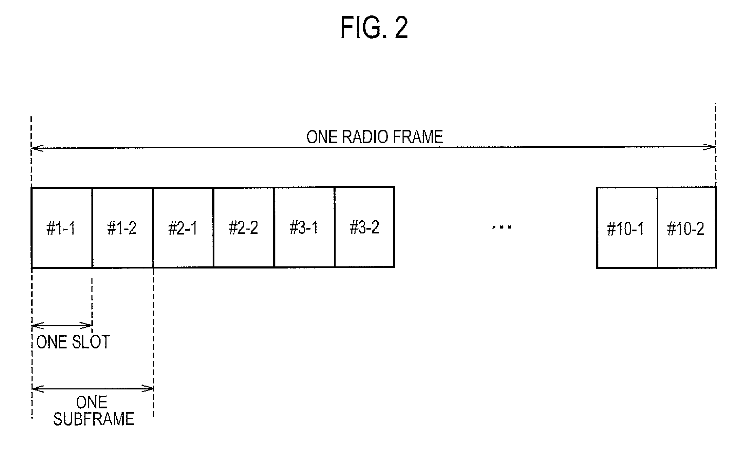

Hereinafter, a radio frame in the first communication system will be described. Fig. 2 is a diagram illustrating the radio frame in the first communication system.

As illustrated in Fig. 2, one radio frame is configured by 10 subframes and one subframe is configured by two slots. One slot has a time length of 0.5 msec, one subframe has a time length of 1 msec, and one radio frame has a time length of 10 msec.

In addition, one slot is configured by a plurality of OFDM symbols (for example, six OFDM symbols or seven OFDM symbols) in a downlink. Similarly, one slot is configured by a plurality of SC-FDMA symbols (for example, six SC-FDMA symbols or seven SC-FDMA symbols) in an uplink.

### (Radio resource)

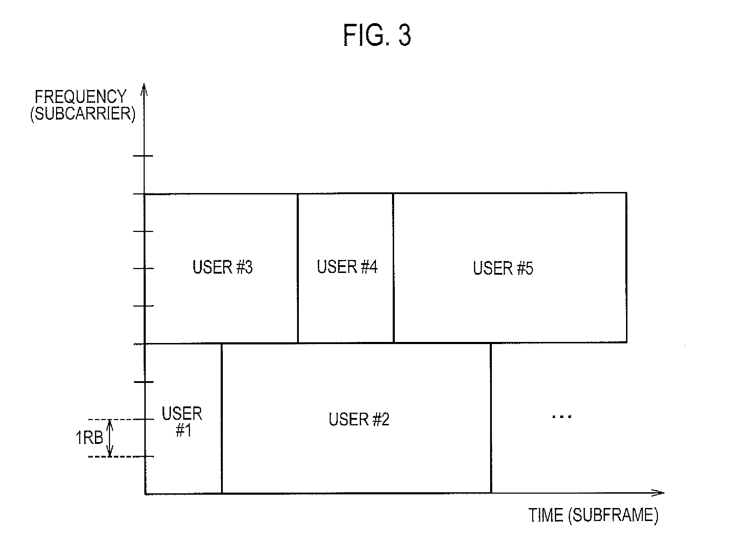

Hereinafter, a radio resource in the first communication system will be described. Fig. 3 is a diagram illustrating the radio resource in the first communication system.

As illustrated in Fig. 3, the radio resource is defined by a frequency axis and a time axis. A frequency is configured by a plurality of subcarriers, and a predetermined number of subcarriers (12 subcarriers) are collectively called a resource block (RB). A time has a unit, such as the OFDM symbol (or the SC-FDMA symbol), the slot, the subframe, and the radio frame, as described above.

Here, the radio resource is assignable to each one resource block. Furthermore, on the frequency axis and the time axis, it is possible to divide and assign the radio resources to a plurality of users (for example, a user #1 to a user #5).

Further, the radio resource is assigned by the MeNB 110A (or the HeNB 110B). The MeNB 110A assigns the radio resources to each UE 10 on the basis of the CQI, the PMI, the RI and the like.

### (Application scene)

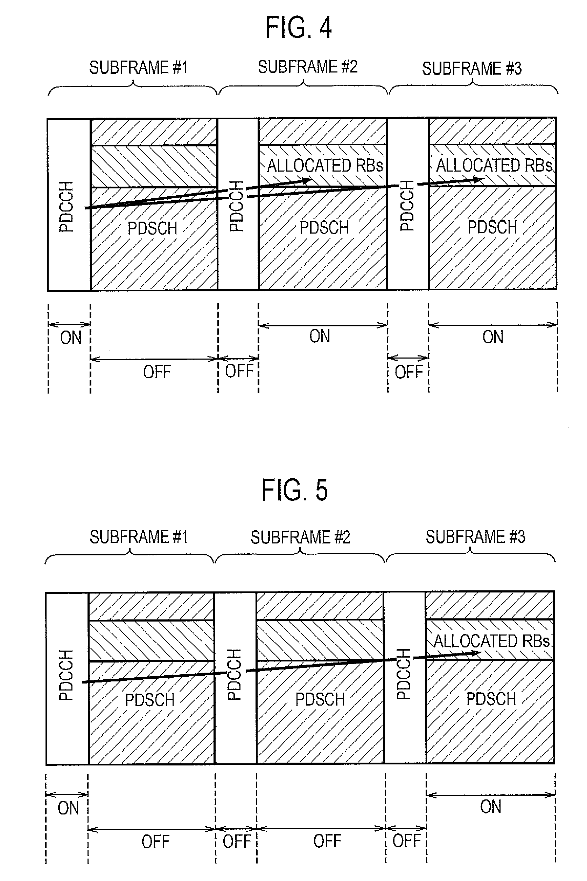

Hereinafter, a scene where the first embodiment is applied will be described. Fig. 4 and Fig. 5 are diagrams illustrating a scene where the first embodiment is applied.

Generally, in the first communication system, communication is performed by using a plurality of subframes between the UE 10 and the radio base station 310 (in this case, the MeNB 110A or the HeNB 110B) assuming a unit configured by the control region (for example, the PDCCH) and the data region(for example, the PDSCH) as one subframe. Further, the UE 10 performs communication by applying assignment information (Downlink Schedule Information) included in the PDCCH (or ePDCCH) that is included in a predetermined subframe to the PDSCH included in the predetermined subframe. That is, the subframe to which the PDCCH including the assignment information belongs is the same as the subframe to which PDSCH belongs, the PDSCH being applied with the assignment information (Downlink Schedule Information).

On the other hand, in the first embodiment, power reduction mode is introduced in which assignment information included in the first subframe is applied to the second subframe that is later than the first subframe on the time axis. In the power reduction mode, the assignment information included in the first subframe is not applied to the first subframe.

In this case, offset information indicating an interval between the first subframe and the second subframe is notified from the radio base station 310 to the UE 10. The offset information may be included in an RRC message (RRC message for requesting the start of the power reduction mode) that is transmitted from the radio base station 310 to the UE 10. Alternatively, the offset information may be included in SIB that is broadcasted from the radio base station 310. Alternatively, the offset information may also be included in CIF that is carried through PDCCH transmitted from the radio base station 310 to the UE 10. In such a case, an RRC message (for example, CIF Configuration) indicating that the CIF indicates the offset information is transmitted from the radio base station 310 to the UE 10 in advance. Alternatively, the offset information may be included in a field (for example, SIF; Subframe Indicator Field) that is newly defined by DCI that is carried through PDCCH transmitted from the radio base station 310 to the UE 10.

In the first embodiment, a subframe to which assignment information included in the first subframe is applied may be one of consecutive subframes starting from the second subframe. Subframe-number designating information that designates the number of consecutive subframes starting from the second subframe may be included in RRC message (RRC message for requesting the start of power reduction mode) that is transmitted from the radio base station 310 to the UE 10. Alternatively, subframe-number designating information may be included in the SIB that is broadcasted from the radio base station 310. Alternatively, subframe-number designating information may be included in the CIF that is carried through the PDCCH transmitted from the radio base station 310 to the UE 10. In such a case, the RRC message (for example, CIF Configuration) indicating that the CIF indicates the subframe-number designating information is transmitted from the radio base station 310 to the UE 10 in advance. In addition, because the CIF is a three-bit field, when the subframe-number designating information is expressed by the CIF, the CIF can express eight of the number of subframes at most. Alternatively, the CIF is used to express five pieces of information as existing information, and able to express three pieces of information as other information. Accordingly, the subframe-number designating information may be expressed by using a part that is not used for expressing existing information. Alternatively, the subframe-number designating information maybe included in a field (for example, SIF; Subframe Indicator Field) that is newly defined by DCI carried through PDCCH transmitted from the radio base station 310 to the UE 10.

Alternatively, a subframe to which assignment information included in the first subframe is applied may be an arbitrarily selected subframe out of the predetermined number of consecutive subframes starting from the second subframe. Out of the predetermined number of consecutive subframes starting from the second subframe, subframe specifying information that specifies a subframe to which assignment information included in the first subframe is applied may be included in the RRC message (RRC message requesting the start of the power reduction mode) that is transmitted from the radio base station 310 to the UE 10. Alternatively, the subframe specifying information may be included in the SIB that is broadcasted from the radio base station 310. Alternatively, the subframe specifying information may be included in the CIF that is carried through the PDCCH transmitted from the radio base station 310 to the UE 10. In such a case, an RRC message (for example, CIF Configuration) indicating that the CIF indicates the subframe specifying information is transmitted from the radio base station 310 to the UE 10 in advance. In addition, the CIF can express whether or not assignment information is applied by "0 (= not applied) " and 1 (= applied). The CIF is a three-bit field, therefore, when the subframe specifying information is expressed by the CIF, the CIF can express whether or not assignment information is applied for three subframes. In such a case, a subframe to which assignment information is applied may be read as HARQ (Hybrid Automatic Repeat Request) process. Alternatively, the subframe specifying information may be included in a field (for example, SIF; Subframe Indicator Field) newly defined by the DCI that is carried though the PDCCH transmitted from the radio base station 310 to the UE 10.

In addition, the offset information, the subframe-number designating information, and the subframe specifying information may be notified to the UE10 in a way not to interfere with each other. For example, the offset information may be included in the SIB, the subframe-number designating information may be included in the RRC message, and the subframe specifying information may be represented by the CIF.

For example, as illustrated in Fig. 4, PDCCH (assignment information) included in a subframe #1 is applied to a subframe #2 and a subframe #3. In such a case, the UE 10 can omit monitoring of PDSCH in the subframe #1, PDCCH in the subframe #2, and PDCCH in the subframe #3. Accordingly, power consumption in the UE 10 is reduced.

Alternatively, as illustrated in Fig. 5, PDCCH (assignment information) included in the subframe #1 is applied to the subframe #3. In such a case, the UE 10 can omit monitoring of the PDSCH in the subframe #1, the PDCCH and the PDSCH in the subframe #2, and the PDCCH of subframe #3. Accordingly, power consumption in the UE 10 is reduced.

It is noted that the number of subframes to which the PDCCH (assignment information) included in the subframe #1 is applied may be designated by the subframe-number designating information. A subframe to which the PDCCH (assignment information) included in the subframe #1 is applied may be specified by the subframe specifying information.

### (Condition to start power reduction mode)

Whether or not the power reduction mode is started may be determined by the radio base station 310 or the UE 10. A condition to start the power reduction mode is decided by: (a) quality (QoS; Quality of Service) required for communication performed between the UE 10 and the radio base station 310; (b) the movement speed of the UE 10; (c) battery remaining amount in the UE 10; (d) whether or not the UE 10 is connected to system power supply, (e) the presence or absence of designation by a user of the UE 10, and (f) traffic volume transmitted from the radio base station 310 to the UE 10 or a data amount that exists in a transmission buffer in the radio base station 310. The condition to start the power reduction mode may be a combination of (a) to (f).

For example, (a) when the QoS is less strict than a predetermined threshold value, the condition to start the power reduction mode is satisfied, and the power reduction mode is designated. Alternatively, (b) when the movement speed of the UE 10 is slower than a predetermined threshold value, the condition to start the power reduction mode is satisfied, and the power reduction mode is designated. Alternatively, (c) when the battery remaining amount in the UE 10 is less than a predetermined threshold value, the condition to start the power reduction mode is satisfied, and the power reduction mode is designated. Alternatively, (d) when the UE 10 is not connected to the system power supply, the condition to start the power reduction mode is satisfied, and the power reduction mode is designated. Alternatively, (e) when the start of the power reduction mode is designated by user setting of the UE 10 (including setting of application, or the like), the condition to start the power reduction mode is satisfied, and the power reduction mode is designated. Alternatively, (f) when the traffic volume transmitted from the radio base station 310 to the UE 10 or the data amount existing in the transmission buffer of the radio base station 310 is less than a predetermined threshold value, the condition to start the power reduction mode is satisfied, and the power reduction mode is designated.

In addition, information required for determining whether or not to start the power reduction mode is acquirable by communication between the UE 10 and the radio base station 310. For example, when the radio base station 310 is a determination subject and the condition to start the power reduction mode is decided by the battery remaining amount in the UE 10, the battery remaining amount is notified from the UE 10 to the radio base station 310.

### (Condition to end power reduction mode)

Whether or not the power reduction mode is ended may be determined by the radio base station 310 or the UE 10. A condition to end the power reduction mode is decided by: (a) quality (QoS; Quality of Service) required for communication performed between the UE 10 and the radio base station 310; (b) the movement speed of the UE 10; (c) the battery remaining amount in the UE 10; (d) whether or not the UE 10 is connected to system power supply, (e) the presence or absence of designation by a user of the UE 10, and (f) traffic volume transmitted from the radio base station 310 to the UE 10 or a data amount that exists in a transmission buffer in the radio base station 310. The condition to end the power reduction mode may be a combination of (a) to (f).

For example, (a) when the QoS is stricter than a predetermined threshold value, the condition to end the power reduction mode is satisfied, and the power reduction mode is released. Alternatively, (b) when the movement speed of the UE 10 is faster than a predetermined threshold value, the condition to end the power reduction mode is satisfied, and the power reduction mode is released. Alternatively, (c) when the battery remaining amount in the UE 10 is more than a predetermined threshold value, the condition to end the power reduction mode is satisfied, and the power reduction mode is released. Alternatively, (d) when the UE 10 is connected to the system power supply, the condition to end the power reduction mode is satisfied, and the power reduction mode is released. Alternatively, (e) when the end of the power reduction mode is designated by the user setting of the UE 10 (including setting of application, or the like), the condition to end the power reduction mode is satisfied, and the power reduction mode is released. Alternatively, (f) when the traffic volume transmitted from the radio base station 310 to the UE 10 or the data amount existing in the transmission buffer of the radio base station 310 is more than a predetermined threshold value, the condition to end the power reduction mode is satisfied, and the power reduction mode is released.

In addition, information required for determining whether or not to end the power reduction mode is acquirable by communication between the UE 10 and the radio base station 310. For example, when the radio base station 310 is a determination subject and the condition to end the power reduction mode is decided by the battery remaining amount in the UE 10, the battery remaining amount is notified from the UE 10 to the radio base station 310.

### (Radio terminal)

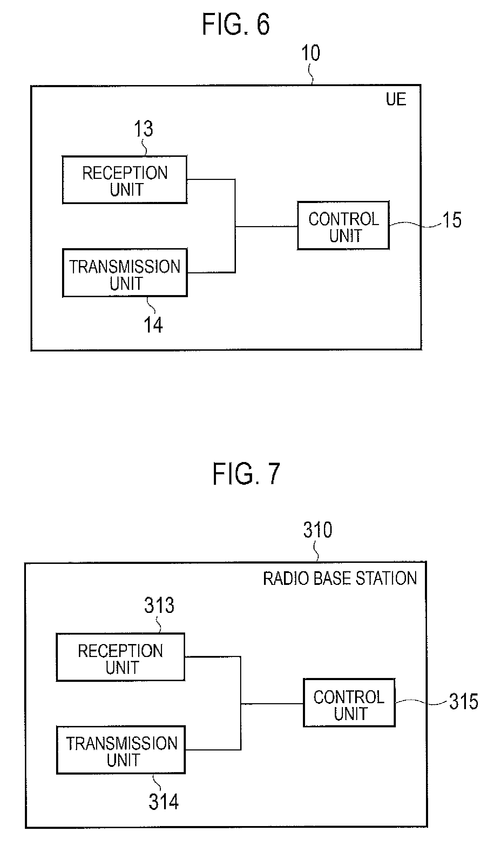

Hereinafter, a radio terminal according to the first embodiment will be described. Fig. 6 is a block diagram illustrating the U10 according to the first embodiment. As illustrated in Fig. 6, the UE 10 has a reception unit 13, a transmission unit 14, and a control unit 15.

The reception unit 13 receives a downlink signal from the radio base station 310. The reception unit 13, for example, receives an RRC message requesting the start of the power reduction mode and an RRC message requesting the end of the power reduction mode. Further, the reception unit 13 receives offset information, subframe-number designating information, and subframe specifying information.

The transmission unit 14 transmits an uplink signal to the radio base station 310. The transmission unit 14, for example, transmits the uplink signal through an uplink shared channel (PUSCH).

The control unit 15 controls operation of the UE 10. In the first embodiment, when the power reduction mode is designated, the control unit 15 applies assignment information in the first subframe to the second subframe which is later than the first subframe on the time axis. As described above, the offset information indicating the interval between the first subframe and the second subframe is notified from the radio base station 310.

When the subframe-number designating information is notified, the control unit 15 applies assignment information included in the first subframe over subframes designated by the subframe-number designating information. When the subframe specifying information is notified, the control unit 15 applies assignment information included in the first subframe to the subframe specified by the subframe specifying information.

In this case, the control unit 15 omits monitoring of PDCCH included in subframes from a subframe next to the first subframe to the second subframe. Further, the control unit 15 omits monitoring of PDSCH included in subframes from the first subframe (except for assignment information) to a subframe prior to the second subframe.

In the first embodiment, when the UE 10 determines the start/end of the power reduction mode, the control unit 15 determines the start/end of the power reduction mode on the basis of (a) quality (QoS; Quality of Service) required for communication performed between the UE 10 and the radio base station 310, (b) the movement speed of the UE 10, (c) the battery remaining amount of the UE 10, (d) whether or not the UE 10 is connected to the system power supply, (e) the presence or absence of designation by the user of the UE 10, and (f) the traffic volume transmitted from the radio base station 310 to the UE 10 or the data amount existing in the transmission buffer of the radio base station 310.

When determining to designate the power reduction mode, the control unit 15 controls the transmission unit 14 to transmit a message indicating that the power reduction mode is started to the radio base station 310. When determining to release the power reduction mode, the control unit 15 controls the transmission unit 14 to transmit a message indicating that the power reduction mode is ended to the radio base station 310.

### (Radio base station)

Hereinafter, the radio base station according to the first embodiment will be described. Fig. 7 is a block diagram illustrating a radio base station 310 according to the first embodiment. The radio base station 310 is preferably the MeNB 110A or the HeNB 110B. It is noted that the radio base station 310 may be the MNB 210A or the HNB 210B. Alternatively, the radio base station 310 may be a relay node.

As illustrated in Fig. 7, the radio base station 310 has a reception unit 313, a transmission unit 314, and a control unit 315.

The reception unit 313 receives data from the UE 10. For example, the reception unit 313 receives the uplink signal through the uplink shared channel (PUSCH).

The transmission unit 314 transmits data to the UE 10. For example, the transmission unit 314 transmits the RRC message requesting for the start of the power reduction mode and the RRC message requesting the end of the power reduction mode. Further, the transmission unit 314 transmits the offset information, the subframe-number designating information, and the subframe specifying information.

The control unit 315 controls the radio base station 310. In the first embodiment, when the radio base station 310 determines the start/end of the power reduction mode, the control unit 315 determines the start/end of the power reduction mode on the basis of (a) quality (QoS; Quality of Service) required for communication performed between the UE 10 and the radio base station 310, (b) the movement speed of the UE 10, (c) the battery remaining amount of the UE 10, (d) whether or not the UE 10 is connected to the system power supply, (e) the presence or absence of designation by the user of the UE 10, and (f) the traffic volume transmitted from the radio base station 310 to the UE 10 or the data amount existing in the transmission buffer of the radio base station 310.

When determining to designate the power reduction mode, the control unit 315 controls the transmission unit 314 to transmit a message indicating that the power reduction mode is started to the UE 10. When determining to release the power reduction mode, the control unit 315 controls the transmission unit 314 to transmit a message indicating that the power reduction mode is ended to the UE 10.

### (Mobile communication method)

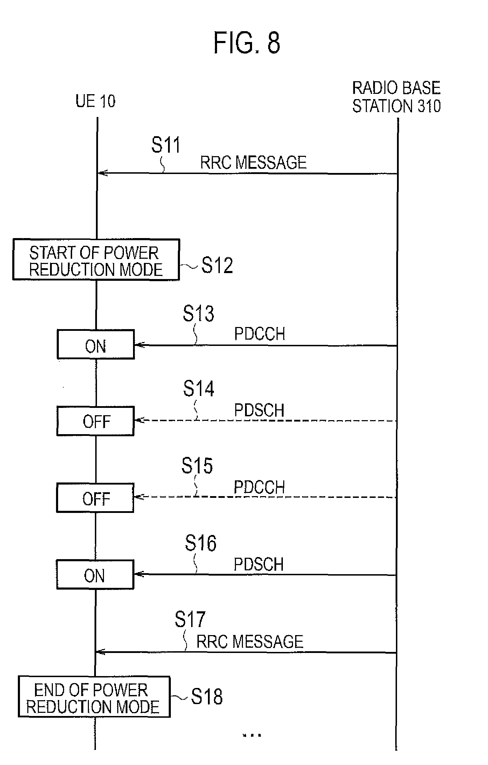

Hereinafter, a mobile communication method according to the first embodiment will be described. Fig. 8 is a sequence diagram illustrating a mobile communication method according to the first embodiment.

As illustrated in Fig. 8, in step 11, the radio base station 310 transmits the RRC message requesting the start of the power reduction mode to the UE10. The offset information is notified from the radio base station 310 to the UE 10. Further, when the number of subframes to which assignment information included in the first subframe is applied is designated, subframe-number designating information is notified from the radio base station 310 to the UE 10. Similarly, when a subframe to which the assignment information included in the first subframe is applied is specified, subframe specifying information is notified from the radio base station 310 to the UE 10.

In step 12, the UE 10 starts the power reduction mode. Here, a case where the offset information is "1" is illustrated. That is, a case where the first subframe and the second subframe are consecutive is illustrated.

In step 13, the radio base station 310 transmits the PDCCH in the subframe #1 (first subframe). The UE 10 receives the PDCCH.

In step 14, the radio base station 310 transmits the PDSCH in the subframe #1 (first subframe). The UE 10 does not monitor nor receive the PDSCH

In step 15, the radio base station 310 transmits the PDCCH in the subframe #2 (second subframe). The UE 10 does not monitor nor receive the PDCCH.

In step 16, the radio base station 310 transmits the PDSCH in the subframe #2 (second subframe). The UE 10 receives the PDSCH.

Thereafter, processes from steps 13 to 16 are repeated. That is, the UE 10 omits monitoring of PDCCH included in subframes from a subframe next to the first subframe to the second subframe. Further, the UE 10 omits monitoring of PDSCH included in subframes from the subframe next to the first subframe to a subframe prior to the second subframe.

In step 17, the radio base station 310 transmits, to the UE 10, an RRC message requesting the end of the power reduction mode.

In step 18, the UE 10 ends the power reduction mode.

### (Operation and Effect)

In the first embodiment, the UE 10 applies assignment information included in the first subframe to the second subframe, not to the first subframe. Therefore, it is possible to omit monitoring of the control region (for example, PDCCH) included in subframes from a subframe next to the first subframe to the second subframe. Moreover, it is also possible to omit monitoring of the data region (for example, PDSCH) included in subframes from the first subframe (except for assignment information) to a subframe prior to the second subframe. Thereby, power consumption in the UE 10 can be reduced.

In the first embodiment, it is possible to apply assignment information (PDCCH) included in the first subframe to a plurality of subframes by using the subframe-number designating information or the subframe specifying information. Thereby, in the case of using a case (CA; Carrier Aggregation) where a plurality of component carriers are used and a case (Phantom cell) where the macro cell transmits the PDCCH while the pico cell transmits the PDSCH or the like, it is possible to prevent suppress capacity shortage of the PDCCH and to accommodate a plurality of UEs 10.

### [First modification]

A description will be given below of a first modification of the first embodiment. Mainly differences from the first embodiment are described below. Specifically, in the first modification, a case (CA ; Carrier Aggregation) where communication is performed by using a plurality of component carriers is illustrated.

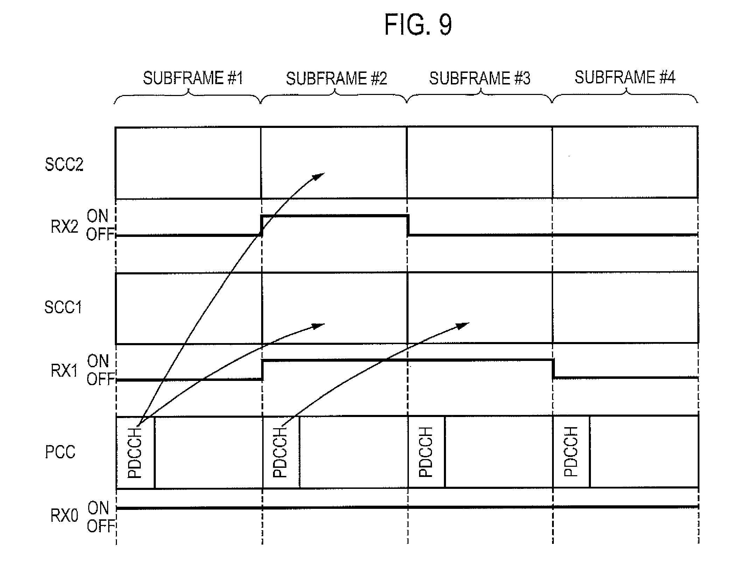

Specifically, as illustrated in Fig. 9, communication is performed by using the plurality of component carriers (PCC, SCC1, andSCC2). Particularly, PDCCH (assignment information) included in the first subframe (subframe #1) belonging to a first component carrier (PCC) is applied to the second subframe (subframe #2) belonging to a second component carrier (SCC1 and SCC2). Further, PDCCH (assignment information) included in the first subframe (subframe #2) belonging to the first component carrier (PCC) is applied to the second subframe (subframe #3) belonging to the second component carrier (SCC1).

It is noted that it is similar to the first embodiment in that the offset information indicating the interval between the first subframe and the second subframe is notified from the radio base station 310 . Further, it is also similar to the first embodiment in that the subframe-number designating information and the subframe specifying information may be notified from the radio base station 310.

In such a case, the UE 10 can omit, on the basis of the PDCCH (assignment information), monitoring subframes in which no data is assigned to the UE 10. Specifically, the UE 10 can omit monitoring of a subframe #1 and a subframe #4 of the SCC1. Further, the UE 10 can omit monitoring of a subframe #1, a subframe #3, and a subframe #4 of the SCC2.

### [Second Modification]

A description will be given below of a second modification of the first embodiment. Mainly differences from the first embodiment are described below. In the second modification, ePDCCH that carries assignment information is defined in the PDSCH.

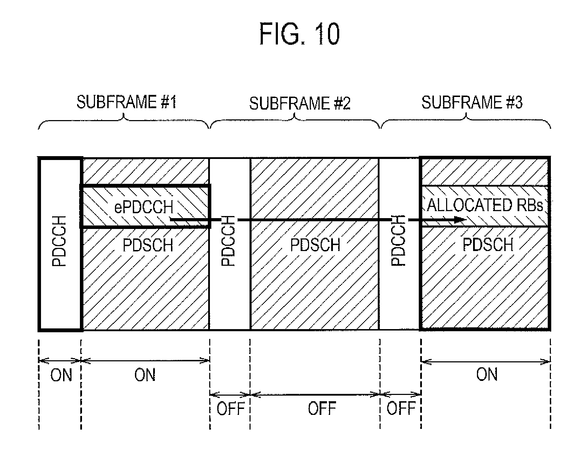

Specifically, as illustrated in Fig. 10, in PDSCH included in a subframe #1, ePDCCH (assignment information) that carries assignment information is defined. The ePDCCH (assignment information) in the subframe #1 is applied to a subframe #3.

It is noted that it is similar to the first embodiment in that the offset information indicating the interval between the first subframe and the second subframe is notified from the radio base station 310 . Further, it is also similar to the first embodiment in that the subframe-number designating information and the subframe specifying information may be notified from the radio base station 310.

In such a case, the UE 10 can omit monitoring of PDCCH in a subframe #2, PDSCH in the subframe #2, and PDCCH in the subframe #3.

It is noted that, for example, when a subframe (for example, the subframe #3) where the assignment information is applied is fixed by the offset information, it is possible to omit monitoring of the PDCCH of the subsequent subframe #3.

### [Third Modification]

A description will be given below of a third modification of the first embodiment. Mainly differences from the second modification are described below. Specifically, in the third modification, a case (CA; Carrier Aggregation) where communication is performed by using a plurality of component carriers is illustrated.

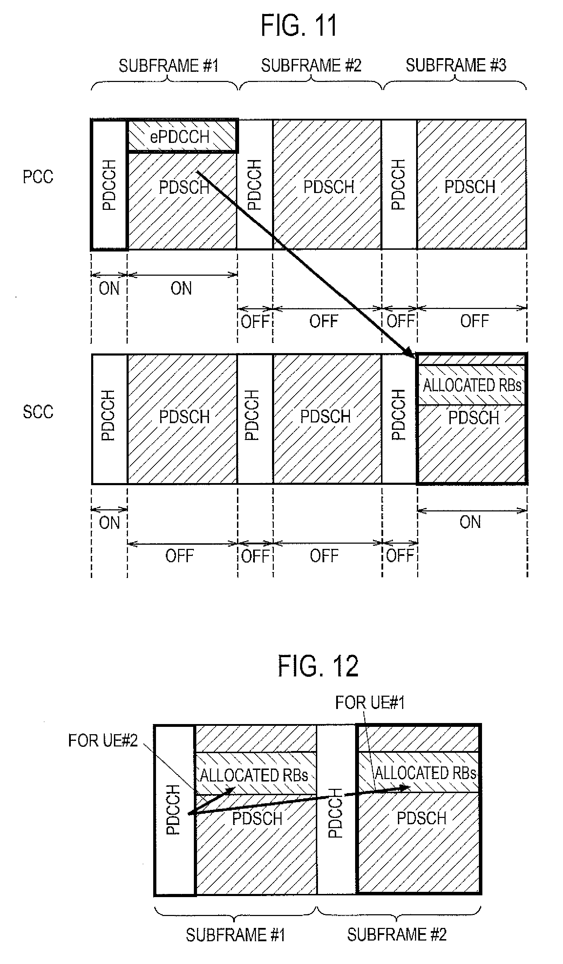

Specifically, as illustrated in Fig. 11, communication is performed by using a plurality of component carriers (PCC and SCC). Particularly, ePDCCH (assignment information) included in a first subframe (subframe #1) belonging to the first component carrier (PCC) is applied to a second subframe (subframe #3) belonging to the second component carrier (SCC).

It is noted that it is similar to the first embodiment in that the offset information indicating the interval between the first subframe and the second subframe is notified from the radio base station 310 . Further, it is also similar to the first embodiment in that the subframe-number designating information and the subframe specifying information may be notified from the radio base station 310.

In such a case, the UE 10 can omit monitoring of a subframe #2 of the PCC and a subframe #3 of the PCC. Further, the UE 10 can omit monitoring of a subframe #1 of the SCC, a subframe #2 of the SCC, and PDCCH of the subframe #3 of the SCC.

It is noted that, for example, when a subframe (for example, the subframe #3 of SCC) where the assignment information is applied is fixed by the offset information, it is possible to omit monitoring of the PDCCH of the subframe #3 of the subsequent SCC.

### [Fourth Modification]

A description will be given below of a fourth modification of the first embodiment. Mainly differences from the first embodiment are described below. In the fourth modification, a case where the UE 10 that is performing the power reduction mode and the UE 10 that is not performing the power reduction mode are mixed is illustrated.

As illustrated in Fig. 12, for the UE 10 (UE #1) that is performing the power reduction mode, PDCCH (assignment information) included in a subframe #1 is applied to a subframe #2. On the other hand, for the UE 10 (UE #2) that is not performing the power reduction mode, the PDCCH (assignment information) included in the subframe #1 is applied to the subframe #1 as usual.

### [Other Embodiments]

The present invention is explained through the above embodiment, but it must not be understood that this invention is limited by the statements and the drawings constituting a part of this disclosure. From this disclosure, various alternative embodiments, examples, and operational technologies will become apparent to those skilled in the art.

Particularly not mentioned in the embodiment, the UE 10 may perform the reception process of the PDSCH region of the subframe, on a subframe in which data assignment is performed to the UE 10, out of subframes from a subframe next to the first subframe to a subframe prior to the second subframe. Therefore, only when there is no data assignment to the UE 10 in (a plurality of) subframes from the first subframe to a subframe prior to the second subframe by the assignment information included in the subframes prior to the first subframe, for example, the UE may omit monitoring the PDSCH region from the first subframe to the subframe prior to the second subframe on the basis of the offset information and the assignment information included in the first subframe.

Particularly not mentioned in the embodiment, the UE 10 may not omit monitoring the PDCCH region even when the offset information is received. For example, the UE 10 may monitor the PDCCH region included in (a plurality of) subframes from the subframe after the first subframe to a subframe prior to the second subframe to receive the assignment information indicating that the data of the UE 10 is assigned to the subframe after the second subframe.

Particularly not mentioned in the embodiment, control information (initial transmission DCI) for initial transmission and control information (retransmission DCI) for retransmission may be used properly. Specifically, by defining resource space to which the initial transmission DCI is assigned and resource space to which the retransmission DCI is assigned, resource space (search space) that should be monitored by the UE 10 may be distinguished. Alternatively, an identifier that identifies the initial transmission DCI and the retransmission DCI may be introduced. Further, the power reduction mode may be applied only to the initial transmission.

Particularly not mentioned in the embodiment, ACK information for each subframe to which assignment information is applied may be simultaneously transmitted from the UE 10 to the radio base station 310. That is, ACK information transmitted in one transmission includes each ACK/NACK of each of subframes to which the assignment information is applied. Alternatively, ACK information for all the subframes to which the assignment information is applied may be transmitted from the UE 10 to the radio base station 310. That is, ACK is transmitted when all the subframes to which the assignment information is applied is successfully received while NACK is transmitted when any of the subframes to which the assignment information is applied is unsuccessfully received.

Particularly not mentioned in the embodiment, the power reduction mode may be applied to a Paging signal or an ETWS signal.

Particularly not mentioned in the embodiment, when introducing the power reduction mode, it is preferable to expand an HARQ process number. For example, a current HARQ process number is eight, however, when introducing the power reduction mode, it is preferable to increase the HARQ process number according to the number of subframes to which assignment information is applied

Particularly not mentioned in the embodiment, when introducing the power reduction mode, there is a case where monitoring of PDSCH is omitted, therefore, it is preferable to intensify CRS (Cell specific Reference Signal) or DMRS (Demodulation Reference Signal) included in PDCCH.

It is noted that, particularly not mentioned in the embodiment, the UE 100 may also perform similar control in a plurality of subframes used for direct Device to Device (D2D) communication. For example, a scheduling UE 100 that performs assignment of radio resources in the D2D communication may notify another UE 100 to which a radio resource is assigned, of a message requesting a start of a power reduction mode. Further, the scheduling UE 100 may notify the offset information, the subframe-number designating information, the subframe specifying information, etc.

In the aforementioned embodiment has described an example in which the present invention is applied to the LTE system. However, the present invention may also be applied to systems, other than the LTE system, as well as the LTE system.

In addition, the entire content of US Provisional Application No. 61/721674 (filed on November 2, 2012) and the entire content of US Provisional Application No. 61/721692 (filed on November 2, 2012) are incorporated in the present specification by reference.

### INDUSTRIAL APPLICABILITY

As described above, the mobile communication system, the user terminal and the mobile communication method according to the present invention are capable of reducing power consumption in the radio terminal, and thus they are useful in a mobile communication filed.

## Claims

1. A mobile communication system that performs communication by using a plurality of subframes between a radio terminal and a radio base station, wherein
the radio terminal comprises:
a reception unit that receives offset information indicating an interval between a first subframe and a second subframe that is later than the first subframe on a time axis out of the plurality of subframes; and
a control unit that applies assignment information included in the first subframe to the second subframe, not to the first subframe.

2. The mobile communication system according to claim 1, wherein the offset information is included in an RRC message for controlling a user terminal or broadcast information broadcast from the radio base station.

3. The mobile communication system according to claim 1, wherein the offset information is included in a control signal carried via PDCCH that is a channel that carries a control signal or ePDCCH that is a channel that carries a control signal in a downlink shared channel.

4. The mobile communication system according to claim 3, wherein the control signal includes CIF that is a field that designates one component carrier in a plurality of component carriers, and
the CIF expresses information for designating the component carrier and the offset information.

5. The mobile communication system according to claim 1, wherein
the reception unit receives subframe-number designating information that designates the number of consecutive subframes starting from the second subframe as an RRC message, and
the control unit applies assignment information included in the first subframe over subframes of which the number is designated by the subframe-number designating information.

6. The mobile communication system according to claim 1, wherein
the assignment information included in the first subframe includes subframe-number designating information that designates the number of consecutive subframes starting from the second subframe, and
the control unit applies assignment information that is included in the control region included in the first subframe over subframes of which the number is designated by the subframe-number designating information.

7. The mobile communication system according to claim 1, wherein
the assignment information included in the first subframe includes subframe specifying information that specifies a subframe to which the assignment information is to be applied out of a predetermined number of consecutive subframes starting from the second subframe, and
the control unit applies the assignment information to the subframe specified by the subframe specifying information.

8. A radio terminal that is used in a mobile communication system that performs communication by using a plurality of subframes between a radio terminal and a radio base station, comprising:
a reception unit that receives offset information indicating an interval between a first subframe and a second subframe that is later than the first subframe on a time axis out of the plurality of subframes; and
a control unit that applies assignment information included in the first subframe to the second subframe, not to the first subframe.

9. A mobile communication method that is used in a mobile communication system that performs communication by using a plurality of subframes between a radio terminal and a radio base station, comprising:
a step of receiving, in the radio terminal, offset information indicating an interval between a first subframe and a second subframe that is later than the first subframe on a time axis out of the plurality of subframes; and
a step of applying, in the radio terminal, assignment information included in the first subframe to the second subframe, not to the first subframe.

10. A mobile communication system that performs communication by using a plurality of subframes between a radio terminal and a radio base station, wherein
the radio terminal includes a control unit that applies assignment information included in a first subframe to a second subframe when a power reduction mode is designated in which the assignment information included in the first subframe is applied to the second subframe which is later than the first subframe on a time axis.

11. The mobile communication system according to claim 10, wherein the first subframe belongs to a first component carrier, and
the second subframe belongs to a second component carrier that is different from the first component carrier.

12. The mobile communication system according to claim 11, wherein the control unit omits, on the basis of the assignment information, monitoring a subframe in which no data is assigned to the radio terminal, out of subframes from a subframe belonging to the second component carrier and corresponding to the first subframe to a subframe prior to the second subframe belonging to the second component carrier.

13. The mobile communication system according to claim 10, wherein the power reduction mode is designated when quality required for communication performed between the radio terminal and the radio base station is less strict than a predetermined threshold value.

14. The mobile communication system according to claim 10, the power reduction mode is designated when a movement speed of the radio terminal is slower than a predetermined threshold value.

15. The mobile communication system according to claim 10, the power reduction mode is designated when a battery remaining amount provided in the radio terminal is less than a predetermined threshold value.

16. The mobile communication system according to claim 1, wherein the power reduction mode is designated when the radio terminal is not connected to a system power supply.

17. The mobile communication system according to claim 10, wherein the power reduction mode is designated when the power reduction mode is designated by a user of the radio terminal.

18. The mobile communication system according to claim 10, wherein the power reduction mode is designated when a traffic volume transmitted from the radio base station to the radio terminal or a data amount existing in a transmission buffer of the radio base station is less than a predetermined threshold value.

19. The mobile communication system according to claim 10, wherein the power reduction mode is designated when the radio terminal receives a message indicating that the power reduction mode is started, from the radio base station.

20. The mobile communication system according to claim 10, wherein the radio base station determines to designate the power reduction mode and transmits, to the radio terminal, a message indicating that the power reduction mode is started.

21. The mobile communication system according to claim 10, wherein the radio terminal determines to designate the power reduction mode and transmits, to the radio base station, a message indicating that the power reduction mode is started.

22. The mobile communication system according to claim 10, wherein the subframe is configured by a control region and a data region, and
the control unit omits monitoring of the control region included in subframes from a subframe next to the first subframe to the second subframe, and omits monitoring of the first subframe excluding the assignment information and the data region included in subframes from a subframe next to the first subframe to a subframe prior to the second subframe.

23. A radio terminal that is used in a mobile communication system that performs communication by using a plurality of subframes between a radio terminal and a radio base station, comprising:
a control unit that applies assignment information included in a first subframe to a second subframe when a power reduction mode is designated in which assignment information included in the first subframe is applied to the second subframe which is later than the first subframe on a time axis.

24. A mobile communication method that is used in a mobile communication system that performs communication by using a plurality of subframes between a radio terminal and a radio base station comprising:
a step of applying, in the radio terminal, assignment information included in a first subframe to a second subframe when a power reduction mode is designated in which assignment information included in the first subframe is applied to the second subframe which is later than the first subframe on a time axis.
